(19) **Europäisches Patentamt / European Patent Office / Office européen des brevets**

(11) **EP 2 746 000 A1**

(12) **EUROPEAN PATENT APPLICATION**
published in accordance with Art. 153(4) EPC

(43) Date of publication:
**25.06.2014 Bulletin 2014/26**

(21) Application number: **11871270.2**

(22) Date of filing: **19.08.2011**

(51) Int Cl.:
**B25J 13/08** $^{(2006.01)}$     **B25J 13/00** $^{(2006.01)}$

(86) International application number:
**PCT/JP2011/068794**

(87) International publication number:
**WO 2013/027250 (28.02.2013 Gazette 2013/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Kabushiki Kaisha Yaskawa Denki Kitakyushu-shi, Fukuoka 806-0004 (JP)**

(72) Inventors:
• **YASUDA Ken' ichi**
  **Kitakyushu-shi**
  **Fukuoka 806-0004 (JP)**

• **NAGATA Hideo**
  **Kitakyushu-shi**
  **Fukuoka 806-0004 (JP)**

(74) Representative: **Grünecker, Kinkeldey, Stockmair & Schwanhäusser**
  **Leopoldstrasse 4**
  **80802 München (DE)**

(54) **ROBOT SYSTEM, ROBOT, AND ROBOT CONTROL DEVICE**

(57)     A robot system, a robot, and a robot control device are provided that can more flexibly operate joint axes of links that touch an object.

A robot system (10) includes a robot (12) and a robot control device (14). The robot 12 includes a plurality of links (28) connected to via a plurality of joint axes, servo motors that drive the joint axes, and a contact detection sensor (30) that detects that one of the links (28) touches an object. The robot control device (14) includes a contact position determination unit (46) that determines a contact position of the link (28) based on an output of the contact detection sensor (30), a retracting direction vector calculation unit (48) that calculates a retracting direction vector in a retracting direction of the link (28) corresponding to the contact position, an assist torque calculation unit (50) that calculates assist torque references for moving the links (28) in the direction of the retracting direction vector, and a flexible control unit (52) that adds the assist torque references to torque references for the servo motors to flexibly control the links (28).

FIG.4

EP 2 746 000 A1

**Description**

Field

The embodiments discussed herein are directed to a robot system, a robot, and a robot control device.

Background

Patent Literature 1 describes a control system for a robot. During a moving operation of a robot each of whose axes is driven by a servo motor controlled in a control system including a position control loop and a speed control loop, this control system for a robot detects whether the robot or an object supported by the robot touches an external object, and if contact is detected, adjusts gains of the position control loop and the speed control loop downward.

Citation List

Patent Literature

Patent Literature 1: Japanese Patent No. 3300625

Summary

Technical Problem

It is an object of the embodiments to provide a robot system, a robot, and a robot control device that can operate joint axes of links that touch an object more flexibly than in the case of not having a configuration of the embodiments.

Solution to Problem

To solve the problem, according to one aspect of the invention, a robot system includes a robot and a robot control device that controls the robot. The robot includes a plurality of links connected via a plurality of joint axes, servo motors that drive the joint axes, and a contact detection sensor that detects that one of the links touches an object. The robot control device includes a contact position determination unit, a retracting direction vector calculation unit, an assist torque calculation unit, and a flexible control unit. The contact position determination unit determines a contact position on the link with the object on the basis of an output from the contact detection sensor. The retracting direction vector calculation unit calculates a retracting direction vector in a retracting direction of the link corresponding to the contact position determined by the contact position determination unit. The assist torque calculation unit calculates assist torque references that are torque references for the servo motors for moving the links in the direction of the retracting direction vector. The flexible control unit adds the assist torque references to torque references for the servo motors to flexibly control the links.

Moreover, according to another aspect of the invention, a robot system includes a robot and a robot control device that controls the robot. The robot includes a plurality of links connected via a plurality of joint axes, servo motors that drive the joint axes, and a contact detection sensor that detects that one of the links touches an object. The robot control device includes a contact position determination unit, a retracting direction vector calculation unit, an assist torque calculation unit, and a flexible control unit. The contact position determination unit determines a contact position on the link with the object on the basis of an output from the contact detection sensor. The retracting direction vector calculation unit includes a contact portion normal vector calculation unit, a contact point movement vector calculation unit, and a retracting direction vector correction unit. The contact portion normal vector calculation unit calculates a retracting direction vector in a retracting direction of the link corresponding to the contact position determined by the contact position determination unit. The contact point movement vector calculation unit calculates a movement vector representing a direction of actual movement of the contact position determined by the contact position determination unit. The retracting direction vector correction unit corrects the retracting direction vector on the basis of the movement vector. The assist torque calculation unit calculates assist torque references that are torque references for the servo motors for moving the links in the direction of the retracting direction vector corrected by the retracting direction vector calculation unit. The flexible control unit adds the assist torque references to torque references for the servo motors to flexibly control the links.

Moreover, according to still another aspect of the invention, a robot includes a plurality of links connected via a plurality of joint axes, and servo motors that drive the joint axes. Each of the links includes a plurality of contact detection sensors that are provided side by side along an outer circumferential direction of the corresponding link to detect that the corresponding link touches an object.

**EP 2 746 000 A1**

Moreover, according to still another aspect of the invention, a robot control device includes a contact position determination unit, a retracting direction vector calculation unit, an assist torque calculation unit, and a flexible control unit. The contact position determination unit determines, when one of links of a robot driven by a plurality of servo motors touches an object, a contact position on the link. The retracting direction vector calculation unit calculates a retracting direction vector in a retracting direction of the link corresponding to the contact position. The assist torque calculation unit calculates assist torque references that are torque references for the servo motors for moving the links in the direction of the retracting direction vector. The flexible control unit adds the assist torque references to torque references for the servo motors to flexibly control the links.

Moreover, according to still another aspect of the invention, a robot control device includes a contact position determination unit, a retracting direction vector calculation unit, an assist torque calculation unit, and a flexible control unit. The contact position determination unit determines, when one of links of a robot driven by a plurality of servo motors touches an object, a contact position on the link. The retracting direction vector calculation unit includes a contact portion normal vector calculation unit, a contact point movement vector calculation unit, and a retracting direction vector correction unit. The contact portion normal vector calculation unit calculates a retracting direction vector in a retracting direction of the link corresponding to the contact position determined by the contact position determination unit. The contact point movement vector calculation unit calculates a movement vector representing a direction of actual movement of the contact position determined by the contact position determination unit. The retracting direction vector correction unit corrects the retracting direction vector on the basis of the movement vector. The assist torque calculation unit calculates assist torque references that are torque references for the servo motors for moving the links in the direction of the retracting direction vector corrected by the retracting direction vector calculation unit. The flexible control unit adds the assist torque references to torque references for the servo motors to flexibly control the links.

Advantageous Effects of Invention

According to the embodiments, joint axes of links that touch an object can operate more flexibly than in the case of not having a configuration of the embodiments.

Brief Description of Drawings

FIG. 1 is an explanatory diagram of a robot system according to a first embodiment.
FIG. 2 is an explanatory diagram of links of a robot included in the robot system.
FIG. 3 is a cross-sectional view of the link of the robot included in the robot system.
FIG. 4 is a block diagram of robot control device included in the robot system.
FIG. 5 is a block diagram of an assist torque calculation unit provided in the robot control device included in the robot system.
FIG. 6 is a block diagram illustrating a modification of the assist torque calculation unit provided in the robot control device included in the robot system.
FIG. 7 is a block diagram of a flexible control unit provided in the robot control device included in the robot system.
FIG. 8 is a block diagram of a robot control device included in a robot system according to a second embodiment.
FIG. 9 is a block diagram of a second retracting direction vector calculation unit provided in the robot control device included in the robot system.
FIG. 10 is an explanatory diagram illustrating a corrected retracting direction vector calculated by the robot control device included in the robot system.

Description of Embodiments

Subsequently, with reference to the accompanying drawings, embodiments embodying the present invention will be described to facilitate understanding of the present invention. The drawings may omit illustrations of portions not involved in the description.

First Embodiment

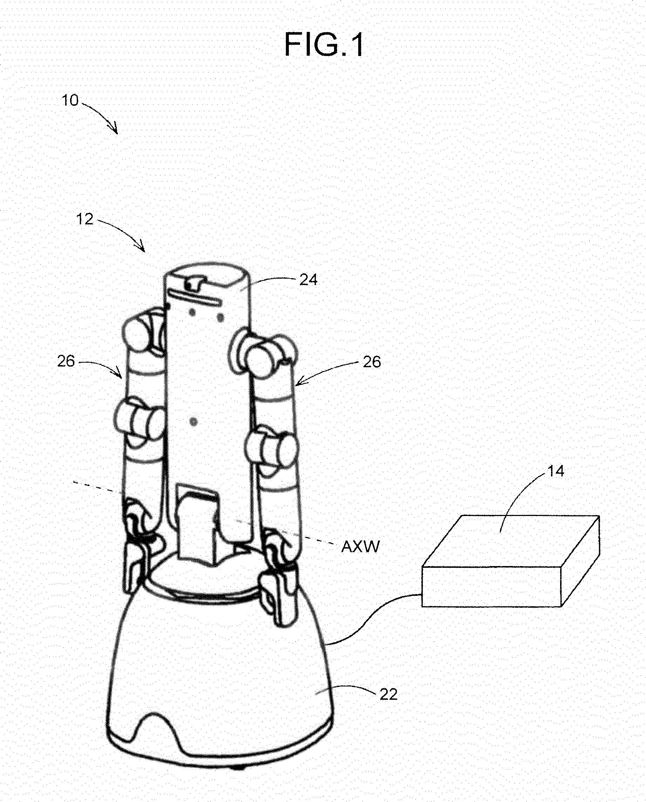

As illustrated in FIG. 1, a robot system 10 according to a first embodiment includes a robot 12 and a robot control device 14 that controls the operation of the robot 12.
The robot 12 includes, for example, a moving unit 22 for moving on a floor surface, a body 24 that is provided on top of the moving unit 22 with a joint axis AXW therebetween and rotates in fore and aft directions about the joint axis AXW serving as the center of rotation, and arms 26 provided on both sides of the body 24. The robot control device 14 may be embedded in the robot 12.

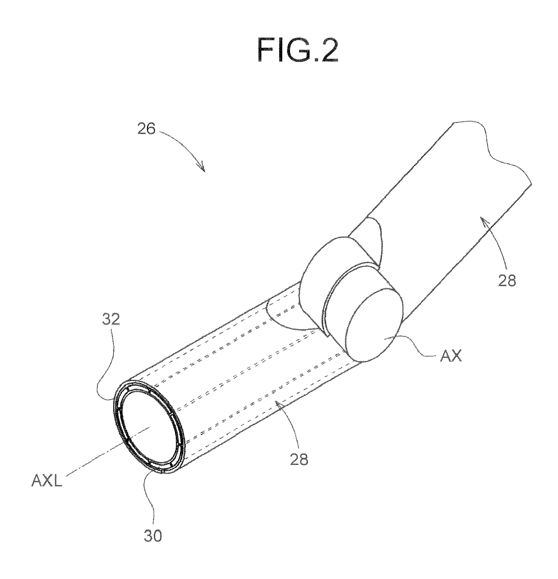

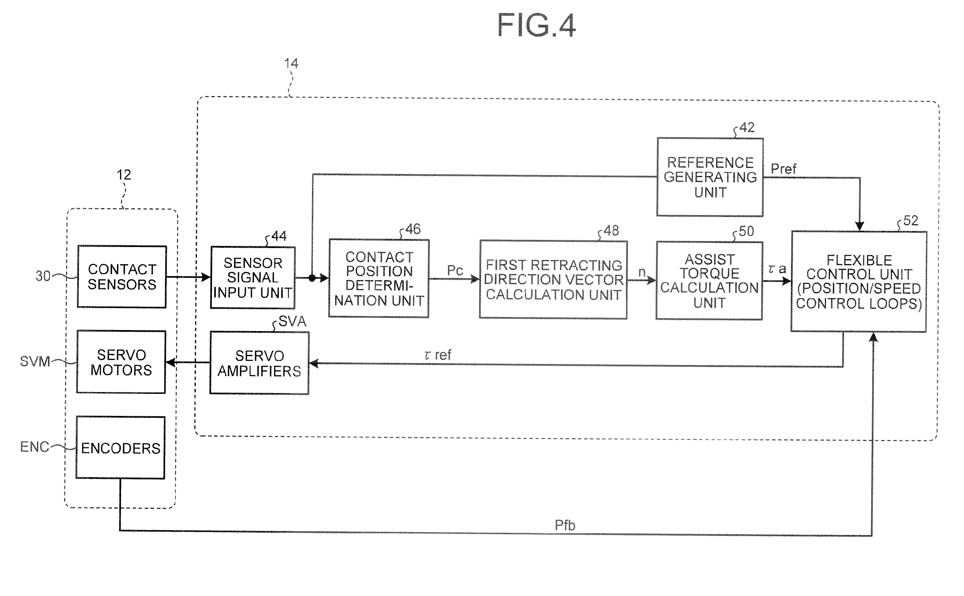

As illustrated in FIG. 2, each of the arms 26 includes a plurality of links 28 connected with a plurality of joint axes AX therebetween. Each of the joint axes AX is driven by a servo motor SVM (refer to FIG. 4) including an encoder ENC.

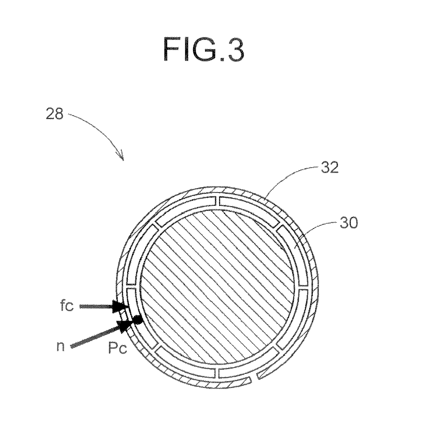

As illustrated in FIGS. 2 and 3, each of the links 28 of the arms 26 of the robot 12 is provided with, for example, a total of eight rectangular contact sensors 30. The contact sensors 30 are provided inside an outer skin 32 covering the link 28. The outer skin 32 moderates the impact force applied when the link 28 touches an object, and thus can protect the contact sensors 30.

Each of the contact sensors 30 can output on/off signals according to the state of contact with the object. For example, the contact sensor 30 can output the on signal when the object is in contact with the link 28, and can output the off signal when the object is apart from the link 28.

The contact sensors 30 are pasted side by side along the outer circumferential direction of the link 28. Specifically, the outer circumference of the link 28 is divided into eight regions, and the contact sensor 30 is pasted in each of the regions. This allows a position on the link 28 touched by the object to be identified at a resolution of 45 degrees with respect to an angular position about the longitudinal axis AXL of the link 28 illustrated in FIG. 2.

The total number of the contact sensors 30 is not limited to eight. The contact sensors 30 need not be provided side by side along the outer circumferential direction of the link 28.

It is only necessary to divide an area for detection of contact with the object into a plurality of regions in the circumferential or longitudinal direction of the link 28, and paste the contact sensor 30 in each of the regions. As a first example, the area for detection of contact with the object may be divided into 16 regions in the circumferential direction of the link 28, and the contact sensor 30 may be provided in each of the regions. As a second example, the area for detection of contact with the object may be divided into eight in the circumferential direction and two in the longitudinal direction of the link 28, thus being divided into a total of 16 regions, and the contact sensor 30 may be provided in each of the regions.

The contact sensor 30 is not limited to the contact sensor that outputs the on/off signals. Other examples of the contact sensor include a sensor that adjusts the level of an output signal thereof according to the magnitude of the contact force (contact pressure) applied thereto.

These contact sensors 30 constitute an example of a contact detection sensor that can detect the contact of the link 28 with the object. The contact detection sensor only needs to be capable of detecting the position or an area including the position on the link 28 touched by the object.

As illustrated in FIG. 4, the robot control device 14 includes a reference generating unit 42, a sensor signal input unit 44, a contact position determination unit 46, a first retracting direction vector calculation unit 48, an assist torque calculation unit 50, and a flexible control unit 52 that outputs torque references τref to servo amplifiers SVA connected to the respective servo motors SVM. The robot control device 14 has an embedded CPU and memory (not illustrated). The blocks illustrated in FIG. 4 are implemented by a software program executed by the CPU and hardware.

FIG. 4 collectively represents the contact sensors 30, the servo motors SVM, the encoders ENC, and the servo amplifiers SVA as respective single blocks.

The reference generating unit 42 can generate position references Pref to the servo motors SVM for rotationally moving the links 28 of the robot 12 to move a tip of the arms 26. The generated position references Pref are entered into the flexible control unit 52.

The contact sensors 30 are connected to the sensor signal input unit 44. The sensor signal input unit 44 functions as an interface for the contact sensors 30. The sensor signal input unit 44 outputs signals corresponding to the on/off signals of the contact sensors 30. These signals are entered into the reference generating unit 42.

Based on the output signals of the sensor signal input unit 44, the contact position determination unit 46 can determine the position on the link 28 touched by the object as a contact position Pc.

The on/off signals output by the contact sensors 30 are entered into the contact position determination unit 46 via the sensor signal input unit 44. The contact position determination unit 46 detects the on signal output by any one of the eight contact sensors 30, and thus identifies the contact sensor 30 touched by the object.

After identifying the contact sensor 30 touched by the object, the contact position determination unit 46 can obtain a predetermined point corresponding to the contact sensor 30 as the contact position Pc illustrated in FIG. 3.

The contact position Pc is predetermined, for example, as a center position of a surface of each of the contact sensors 30. The contact position Pc is not limited to the center position of the surface of the contact sensor 30, but may be any position that corresponds to the contact sensor 30.

Because the contact position Pc is predetermined, the position on the link 28 actually touched by the object may differ from the contact position Pc obtained by the contact position determination unit 46, as illustrated in FIG. 3. However, increasing the number of the divided regions on which the contact sensors are pasted brings the position on the link 28 actually touched by the object into closer agreement with the contact position Pc. Alternatively, providing a sensor also outputting a contact position instead of the contact sensor 30 brings the position on the link 28 actually touched by the object into substantial agreement with the contact position Pc.

By using a coordinate transformation matrix T derived from angle information of the respective joint axes AX obtained from signals of the encoders ENC of the servo motors SVM driving the links 28 of the robot 12, the contact position Pc is calculated, for example, as a position in a robot coordinate system fixed to the body 24 of the robot 12.

The contact position determination unit 46 may be configured to detect a plurality of contact positions. That case allows the contact position determination unit 46 to output a plurality of calculated contact positions.

According to the contact position Pc, the first retracting direction vector calculation unit 48 illustrated in FIG. 4 can calculate the direction of movement (retracting direction) of the link 28 as a retracting direction vector n.

The retracting direction vector n is predetermined, and is, for example, a unit vector in the normal direction of a surface of the link 28 in the contact position Pc. Therefore, the direction of the retracting direction vector n may differ from the direction of the external force fc received from the object in contact with the link 28 as illustrated in FIG. 3.

The retracting direction vector n is calculated as a vector in the robot coordinate system by using the above-described coordinate transformation matrix T.

Based on the contact position Pc and the retracting direction vector n, the assist torque calculation unit 50 illustrated in FIG. 4 can calculate an assist torque reference $\tau a$ for each of the joint axes AX of the robot 12.

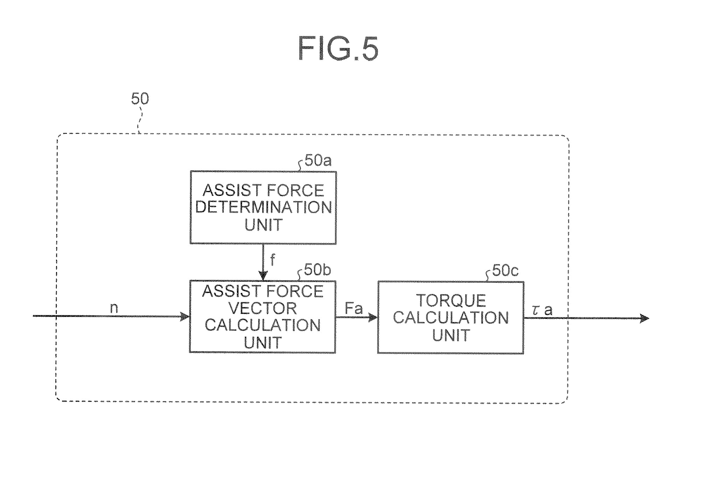

As illustrated in FIG. 5, the assist torque calculation unit 50 includes an assist force determination unit 50a, an assist force vector calculation unit 50b, and a torque calculation unit 50c.

The assist force determination unit 50a can determine the magnitude of the assist force f for retracting the links 28 (arm 26), and can output the assist force f as a scalar quantity. Changing the assist force f depending on the situation can adjust flexibility of the joint axes AX of the arm 26 included in the robot 12.

For example, the assist force determination unit 50a can output the assist force f having a larger first magnitude after the link 28 touches the object until a predetermined time tim (such as 1 to 10 milliseconds) passes, and can output the assist force f having a second magnitude smaller than the first magnitude after the time tim has passed. In this manner, after the link 28 touches the object, the assist force determination unit 50a first outputs the assist force f having the larger first magnitude so as to quickly move the link 28 in the retracting direction, thus suppressing the contact force (impact force).

When the contact sensor is the above-mentioned sensor that adjusts the level of the output signal thereof according to the magnitude of the contact force (contact pressure), the assist force determination unit 50a may determine the assist force f based on the level of this signal.

Based on the assist force f and the retracting direction vector n calculated by the first retracting direction vector calculation unit 48, the assist force vector calculation unit 50b can calculate an assist force vector Fa in the contact position Pc using the following equation.

$$Fa = f \cdot n \qquad \text{Equation (1)}$$

The torque calculation unit 50c can obtain a Jacobian transpose $J^T$ in the calculated contact position from the calculated contact position calculated by the contact position determination unit 46, and can calculate the assist torque reference $\tau a$ for the servo motor SVM driving each of the joint axes AX using the following equation. The assist torque reference $\tau a$ is a torque reference for each of the joint axes AX for moving the link 28 in the direction of the retracting direction vector.

$$\tau a = J^T Fa \qquad \text{Equation (2a)}$$

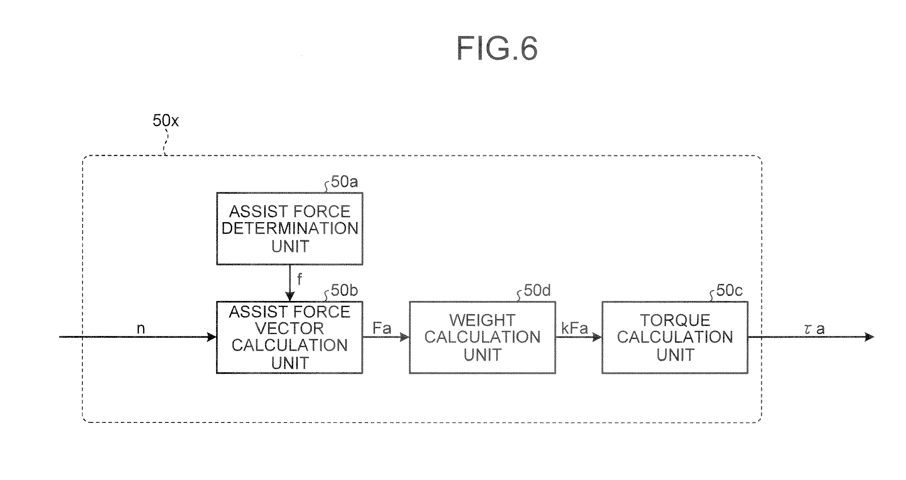

The assist torque calculation unit may be an assist torque calculation unit 50x that further includes a weight calculation unit 50d between the assist force vector calculation unit 50b and the torque calculation unit 50c, as illustrated in FIG. 6.

As represented in the following equation, the weight calculation unit 50d can multiply the assist force vector Fa output from the assist force vector calculation unit 50b of the preceding block by a weighting factor matrix k, and can output the result to the torque calculation unit 50c of the subsequent block. The weighting factor matrix k is a diagonal matrix for adjusting the magnitude of assist torque (torque for moving the link 28 in the direction of the retracting direction vector) to be generated by each of the joint axes AX of the link 28.

The weighting factor matrix k is set, for example, as follows.

As a first example, the weighting factor matrix k is set according to amounts of coefficients of viscous friction of reduction gears, etc. provided at the joint axes AX. Specifically, the weighting factor matrix k is set so as to increase the assist torque reference for the servo motor SVM driving each of the joint axes AX according to the amount of the coefficient of viscous friction of the joint axis AX. In other words, the weighting factor matrix k performs weighting so as to give the joint axis AX having a larger coefficient of viscous friction a larger magnitude of assist torque.

Setting the weighting factor matrix k as exemplified in the first example absorbs differences in the viscous friction of the joint axes AX, thus allowing the links 28 (arm 26) to perform a natural operation.

As a second example, the weighting factor matrix k performs weighting so as to give the largest magnitude of assist torque to the joint axis AX located at the root (base end) of the link 28 that touches the object. More specifically, the weighting factor matrix k performs weighting so as to give a larger magnitude of assist torque to the joint axis AX nearer to the contact position Pc on the link 28 that touches the object, among all of the joint axes AX located on the side nearer to the root (base end) of the arm 26 than the contact position Pc.

Setting the weighting factor matrix k as exemplified in the second example improves performance to absorb the external force received from the touched object because the axis nearer to the contact position Pc performs a retracting operation more quickly.

The torque calculation unit 50c of the assist torque calculation unit 50x calculates the assist torque references $\tau a$ given by the following equation.

$$\tau a = k \cdot J^T Fa \qquad \text{Equation (2b)}$$

Based on the position references Pref and the assist torque references $\tau a$, the flexible control unit 52 illustrated in FIG. 4 can output the torque references $\tau$ref for driving the servo motors SVM to the servo amplifiers SVA, and thus can perform control so as to flexibly operate the joint axes AX of the robot 12.

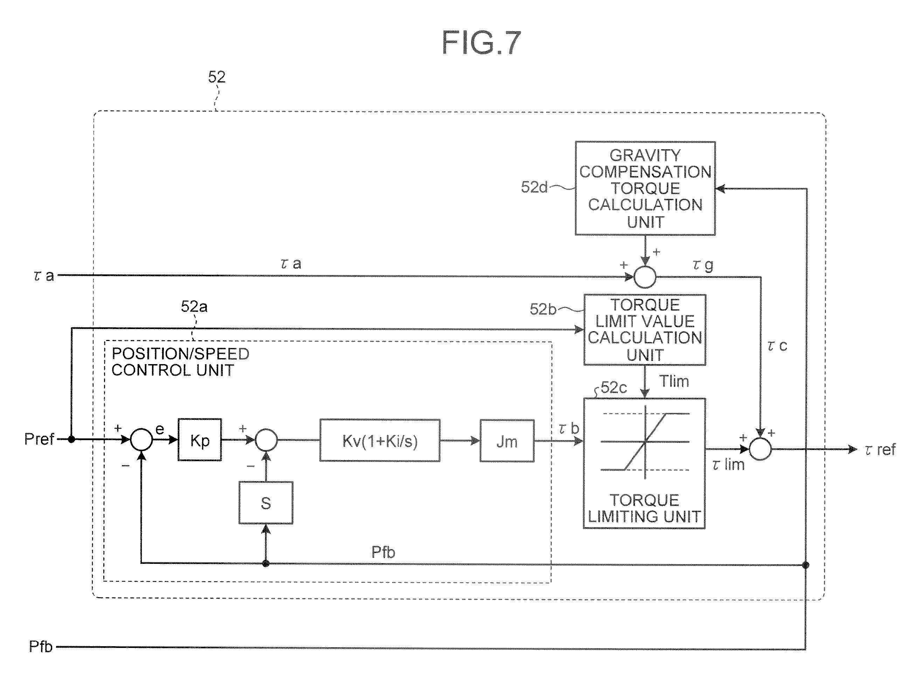

As illustrated in FIG. 7, the flexible control unit 52 includes a position/speed control unit 52a, a torque limit value calculation unit 52b, a torque limiting unit 52c, and a gravity compensation torque calculation unit 52d.

Position/speed control loops (servo loops) are formed in the position/speed control unit 52a. The position/speed control unit 52a can output a torque reference $\tau b$ according to a position error e between an angle feedback (encoder value) Pfb of each of the servo motors SVM obtained from the encoders ENC and the position reference Pref generated by the reference generating unit 42.

The torque limit value calculation unit 52b can obtain a torque limit value Tlim.

The torque limit value calculation unit 52b can obtain the torque limit value (upper or lower limit value) Tlim, for example, so as to include therebetween torque of the servo motor SVM required for motion of the links 28 (torque for accelerating both the links 28 and a tip load of the arm 26, and torque for maintaining movement velocities of the links 28).

As another example, the torque limit value calculation unit 52b can obtain a predetermined maximum torque value of the servo motor SVM as the torque limit value Tlim.

The torque limiting unit 52c can limit the torque reference $\tau b$ output by the position/speed control unit 52a with the torque limit value Tlim calculated by the torque limit value calculation unit 52b, and thus can output a limited torque reference $\tau$lim.

The gravity compensation torque calculation unit 52d can calculate torque by gravity of each of the joint axes AX as gravity compensation torque $\tau g$ by calculation of dynamics based on the encoder value Pfb of each of the servo motors SVM.

The calculated gravity compensation torque $\tau g$ is added together with the assist torque reference $\tau a$ to the torque reference $\tau$lim output by the torque limiting unit 52c.

This keeps the links 28 from dropping and the torque required for moving the links 28 from being insufficient due to the limitation of the torque reference by the torque limiting unit 52c.

A description will be made below of the operation of the robot system 10 separately for a case in which the arm 26 is not in contact with the object, and for another case in which the arm 26 is in contact with the object.

(1) Case in which arm 26 is not in contact with object

The position/speed control unit 52a of the flexible control unit 52 outputs the torque reference $\tau b$ based on the position reference Pref generated by the reference generating unit 42. If the torque reference $\tau b$ exceeds the torque limit value Tlim, the torque limiting unit 52c limits the magnitude of the torque reference and outputs it as the torque reference $\tau$lim (refer to FIG. 7).

The assist torque calculation unit 50 does not output the assist torque reference $\tau a$ because each of the contact sensors 30 does not output the on signal. In other words, the magnitude of the assist torque reference $\tau a$ is zero.

The gravity compensation torque calculation unit 52d outputs the gravity compensation torque $\tau g$ based on the

encoder value Pfb.

Accordingly, the gravity compensation torque $\tau g$ calculated by the gravity compensation torque calculation unit 52d is added to the torque reference $\tau$lim, and the torque reference $\tau$ref is output to the servo amplifier SVA (refer to FIG. 4).

As a result, each of the servo motors SVM is driven according to the torque reference $\tau$ref, and the arm 26 of the robot 12 operates.

The addition of the gravity compensation torque $\tau g$ to the torque reference $\tau$ref keeps the arm 26 from dropping by its own weight.

(2) Case in which arm 26 is in contact with object

The operation of the robot system 10 differs depending on whether the arm 26 is retracted from the touched object or moves following the external force fc received from the touched object. The operation will be described below for separate cases.

(2a) Case in which arm 26 is retracted from touched object

Based on the signal output by the sensor signal input unit 44, the reference generating unit 42 stops outputting the position reference Pref.

The position/speed control unit 52a of the flexible control unit 52 outputs the torque reference $\tau b$ according to the position error e.

The torque limit value calculation unit 52b determines that the output of the position reference Pref has been stopped, and sets the torque limit value Tlim to zero. It follows that the torque limiting unit 52c sets the torque reference $\tau$lim to zero regardless of the torque reference $\tau b$.

The assist torque calculation unit 50 outputs the assist torque reference $\tau a$ according to the contact position Pc.

The gravity compensation torque calculation unit 52d outputs the gravity compensation torque $\tau g$ based on the encoder value Pfb.

Accordingly, while the torque reference $\tau$lim output by the torque limiting unit 52c is set to zero, the assist torque reference $\tau a$ and the gravity compensation torque $\tau g$ are added to the torque reference $\tau$lim at the block subsequent to the torque limiting unit 52c, and the result is output as the torque reference $\tau$ref.

As a result, each of the servo motors SVM is driven according to the torque reference $\tau$ref, and the links 28 are retracted by the assist torque from the touched object.

The addition of the gravity compensation torque $\tau g$ to the torque reference $\tau$ref keeps the arm 26 from dropping by its own weight.

(2b) Case in which arm 26 moves following the external force fc received from touched object

The reference generating unit 42 continues outputting the position reference Pref.

The position/speed control unit 52a of the flexible control unit 52 outputs the torque reference $\tau b$ based on the position reference Pref generated by the reference generating unit 42. If the torque reference $\tau b$ output by the position/speed control unit 52a exceeds the torque limit value Tlim, the torque limiting unit 52c limits the magnitude of the torque reference and outputs it as the torque reference $\tau$lim.

The assist torque calculation unit 50 outputs the assist torque reference $\tau a$ according to the contact position Pc.

The gravity compensation torque calculation unit 52d outputs the gravity compensation torque $\tau g$ based on the encoder value Pfb.

Accordingly, the assist torque reference $\tau a$ and the gravity compensation torque $\tau g$ are added to the torque reference $\tau$lim output by the torque limiting unit 52c, and the torque reference $\tau$ref is output.

This results in driving of each of the servo motors SVM according to the torque reference $\tau$ref. The limitation of the magnitude of the torque reference $\tau b$ by the torque limiting unit 52c allows the links 28 (arm 26) to follow the external force fc received from the touched object. At the same time, the continuation of the output of the position reference Pref causes the joint axes AX of the arm 26 to try to continue the movement toward a target position as much as possible while following the external force fc.

The addition of the assist torque reference $\tau a$ to the torque reference $\tau$ref causes the joint axes AX of the arm 26 to flexibly operate in the direction of following the external force fc.

The further addition of the gravity compensation torque $\tau g$ to the torque reference $\tau$ref keeps the links 28 from dropping by their own weight.

As described above, the addition of the assist torque allows the robot system 10 according to the present embodiment to flexibly operate the joint axes AX of the arm 26. In addition, an impact applied to the object touching the link 28 can be suppressed.

Second Embodiment

Subsequently, a description will be made of a robot system according to a second embodiment. The same components as those of the robot system 10 according to the first embodiment may be given the same symbols, and detailed description thereof may be omitted.

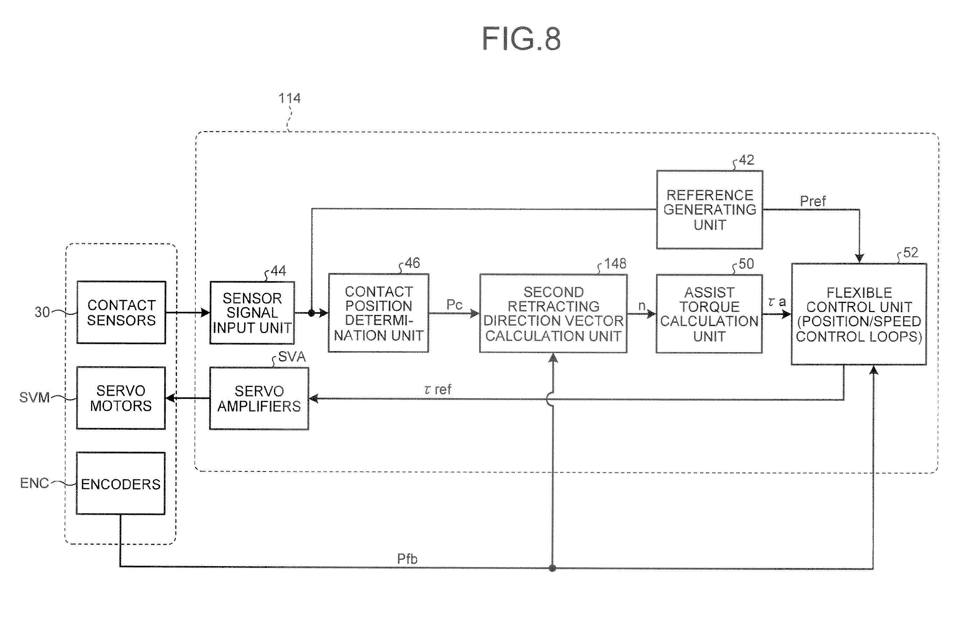

As illustrated in FIG. 8, a robot control device 114 of the robot system according to the present embodiment includes a second retracting direction vector calculation unit 148, instead of the first retracting direction vector calculation unit 48.

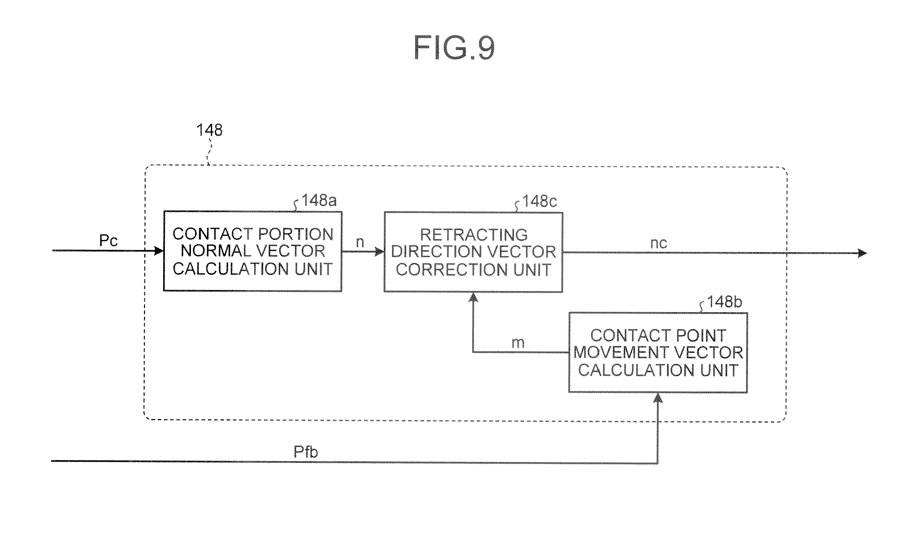

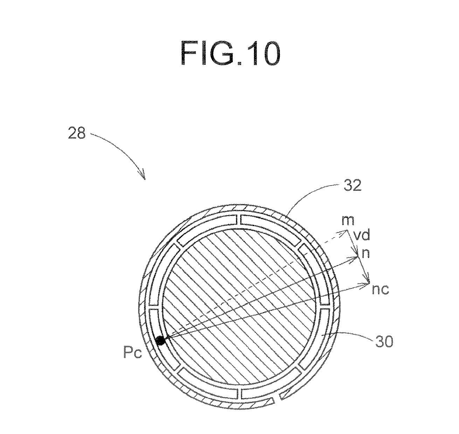

As illustrated in FIG. 9, the second retracting direction vector calculation unit 148 includes a contact portion normal vector calculation unit 148a that can calculate the retracting direction vector n (refer to FIG. 10), a contact point movement vector calculation unit 148b that can calculate a movement vector m, and a retracting direction vector correction unit 148c that can correct the retracting direction vector n based on the movement vector m.

According to the contact position Pc, the contact portion normal vector calculation unit 148a can calculate the direction of movement of the link 28 as the retracting direction vector n. The retracting direction vector n is predetermined, and is, for example, a unit vector in the normal direction of the surface of the link 28 in the contact position.

From the angles of the joint axes AX calculated based on the encoder values Pfb of the servo motors SVM and the contact position Pc obtained by the contact position determination unit 46, the contact point movement vector calculation unit 148b can calculate a vector representing the direction of actual movement of the contact position Pc as the movement vector m.

The retracting direction vector correction unit 148c can calculate a difference vector vd between the retracting direction vector n calculated by the contact portion normal vector calculation unit 148a and the movement vector m calculated by the contact point movement vector calculation unit 148b.

The retracting direction vector correction unit 148c can further calculate a vector by combining the difference vector vd with the retracting direction vector n as a new retracting direction vector nc.

In other words, based on the encoder values Pfb of the servo motors SVM, the second retracting direction vector calculation unit 148 can correct the retracting direction vector n calculated by the contact portion normal vector calculation unit 148a to calculate the corrected retracting direction vector nc so as to be able to move the link 28 in the direction of the predetermined retracting direction vector n, as illustrated in FIG. 10.

The robot system according to the present embodiment can move the link 28 in the predetermined retracting direction more accurately than in the case of not having the configuration of the present embodiment.

The present invention is not limited to the above-described embodiments, and can be modified within the scope of not changing the gist of the present invention. For example, the technical scope of the present invention includes a case of constituting the invention by combining some or all of the embodiments and the modification described above.

The robot is not limited to a robot that includes the moving unit, the body provided on top of the moving unit, and the arms provided on both sides of the body. The robot may be an industrial robot that includes, for example, links connected by joint axes.

The present invention is applied not only to the arms 26 exemplified in the above-described embodiments. The present invention can also be applied with respect to, for example, the joint axis AXW between the body 24 and the moving unit 22.

Reference Signs List

| | |
|---|---|
| 10 | Robot system |
| 12 | Robot |
| 14 | Robot control device |
| 22 | Moving unit |
| 24 | Body |
| 26 | Arm |
| 28 | Link |
| 30 | Contact sensor |
| 32 | Outer skin |
| 42 | Reference generating unit |
| 44 | Sensor signal input unit |
| 46 | Contact position determination unit |
| 48 | First retracting direction vector calculation unit |
| 50 | Assist torque calculation unit |

50a     Assist force determination unit
50b     Assist force vector calculation unit
50c     Torque calculation unit
50d     Weight calculation unit
50x     Assist torque calculation unit
52     Flexible control unit
52a     Position/speed control unit
52b     Torque limit value calculation unit
52c     Torque limiting unit
52d     Gravity compensation torque calculation unit
114     Robot control device
148     Second retracting direction vector calculation unit
148a     Contact portion normal vector calculation unit
148b     Contact point movement vector calculation unit
148c     Retracting direction vector correction unit
ENC     Encoder
SVA     Servo amplifier
SVM     Servo motor
AX     Joint axis

**Claims**

**1.** A robot system comprising:

    a robot that comprises:

        a plurality of links connected via a plurality of joint axes;
        servo motors that drive the joint axes; and
        a contact detection sensor that detects that one of the links touches an object; and

    a robot control device that controls the robot,
    the robot control device comprising:

        a contact position determination unit that determines a contact position on the link with the object on the basis of an output from the contact detection sensor;
        a retracting direction vector calculation unit that calculates a retracting direction vector in a retracting direction of the link corresponding to the contact position determined by the contact position determination unit;
        an assist torque calculation unit that calculates assist torque references that are torque references for the servo motors for moving the links in the direction of the retracting direction vector; and
        a flexible control unit that adds the assist torque references to torque references for the servo motors to flexibly control the links.

**2.** The robot system according to claim 1, wherein
the assist torque calculation unit comprises:

    an assist force determination unit that determines a magnitude of assist force for retracting the links;
    an assist force vector calculation unit that calculates an assist force vector on the basis of the retracting direction vector of the links and the magnitude of the assist force; and
    a torque calculation unit that calculates the assist torque references on the basis of the assist force vector.

**3.** The robot system according to claim 1, wherein
the assist torque calculation unit comprises:

    an assist force determination unit that determines a magnitude of assist force for retracting the links;
    an assist force vector calculation unit that calculates an assist force vector on the basis of the retracting direction vector of the links and the magnitude of the assist force;
    a weight calculation unit that multiplies the assist force vector by a weighting factor matrix for adjusting magnitudes of the assist torque references for the servo motors to calculate the assist force vector to which weight adjustment is applied; and

a torque calculation unit that calculates the assist torque references on the basis of the assist force vector calculated by the weight calculation unit.

4. The robot system according to claim 3, wherein the weighting factor matrix is a matrix that performs weighting so as to give a larger magnitude of assist torque for moving the links in the direction of the retracting direction vector to the joint axis having a larger coefficient of viscous friction.

5. The robot system according to claim 3, wherein the weighting factor matrix is a matrix that performs weighting so as to give a largest magnitude of assist torque for moving the links in the direction of the retracting direction vector to the joint axis located at a base end of the link, among the joint axes located close to the base end of the link that touches the object.

6. The robot system according to claim 5, wherein the weighting factor matrix is a matrix that performs weighting so as to give a larger magnitude of the assist torque to the joint axis nearer to the link that touches the object, among the joint axes located close to the base end of the link that touches the object.

7. The robot system according to any one of claims 2 to 6, wherein the assist force determination unit determines the magnitude of the assist torque to be a first magnitude until a predetermined time tim passes after the link touches the object, and determines the magnitude of the assist torque to be a second magnitude smaller than the first magnitude after the time tim has passed.

8. A robot system comprising:

a robot that comprises:

a plurality of links connected via a plurality of joint axes;
servo motors that drive the joint axes; and
a contact detection sensor that detects that one of the links touches an object; and

a robot control device that controls the robot,
the robot control device comprising:

a contact position determination unit that determines a contact position on the link with the object on the basis of an output from the contact detection sensor;
a retracting direction vector calculation unit comprising:

1) a contact portion normal vector calculation unit that calculates a retracting direction vector in a retracting direction of the link corresponding to the contact position determined by the contact position determination unit;
2) a contact point movement vector calculation unit that calculates a movement vector representing a direction of actual movement of the contact position determined by the contact position determination unit; and
3) a retracting direction vector correction unit that corrects the retracting direction vector on the basis of the movement vector;

an assist torque calculation unit that calculates assist torque references that are torque references for the servo motors for moving the links in the direction of the retracting direction vector corrected by the retracting direction vector calculation unit; and
a flexible control unit that adds the assist torque references to torque references for the servo motors to flexibly control the links.

9. A robot comprising:

a plurality of links connected via a plurality of joint axes; and
servo motors that drive the joint axes,
each of the links comprising a plurality of contact detection sensors that are provided side by side along an outer circumferential direction of the corresponding link to detect that the corresponding link touches an object.

10. A robot control device comprising:

a contact position determination unit that determines, when one of links of a robot driven by a plurality of servo motors touches an object, a contact position on the link;
a retracting direction vector calculation unit that calculates a retracting direction vector in a retracting direction of the link corresponding to the contact position;
an assist torque calculation unit that calculates assist torque references that are torque references for the servo motors for moving the links in the direction of the retracting direction vector; and
a flexible control unit that adds the assist torque references to torque references for the servo motors to flexibly control the links.

11. A robot control device comprising:

a contact position determination unit that determines, when one of links of a robot driven by a plurality of servo motors touches an object, a contact position on the link;
a retracting direction vector calculation unit comprising:

1) a contact portion normal vector calculation unit that calculates a retracting direction vector in a retracting direction of the link corresponding to the contact position determined by the contact position determination unit;
2) a contact point movement vector calculation unit that calculates a movement vector representing a direction of actual movement of the contact position determined by the contact position determination unit; and
3) a retracting direction vector correction unit that corrects the retracting direction vector on the basis of the movement vector;

an assist torque calculation unit that calculates assist torque references that are torque references for the servo motors for moving the links in the direction of the retracting direction vector corrected by the retracting direction vector calculation unit; and
a flexible control unit that adds the assist torque references to torque references for the servo motors to flexibly control the links.

# FIG.1

# FIG.2

# FIG.3

# FIG.4

EP 2 746 000 A1

# FIG.5

FIG.6

EP 2 746 000 A1

# FIG.7

EP 2 746 000 A1

# FIG.8

EP 2 746 000 A1

# FIG.9

148

148a
CONTACT PORTION
NORMAL VECTOR
CALCULATION UNIT

Pc

n

148c
RETRACTING
DIRECTION VECTOR
CORRECTION UNIT

nc

148b
CONTACT POINT
MOVEMENT VECTOR
CALCULATION UNIT

m

Pfb

# FIG.10

## INTERNATIONAL SEARCH REPORT

| International application No. |
| --- |
| PCT/JP2011/068794 |

A.   CLASSIFICATION OF SUBJECT MATTER
*B25J13/08*(2006.01)i, *B25J13/00*(2006.01)i

According to International Patent Classification (IPC) or to both national classification and IPC

B.   FIELDS SEARCHED

Minimum documentation searched (classification system followed by classification symbols)
B25J1/00-21/02

Documentation searched other than minimum documentation to the extent that such documents are included in the fields searched
Jitsuyo Shinan Koho          1922-1996   Jitsuyo Shinan Toroku Koho   1996-2011
Kokai Jitsuyo Shinan Koho    1971-2011   Toroku Jitsuyo Shinan Koho   1994-2011

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| Y<br>A | JP 2004-344998 A  (Yaskawa Electric Corp.),<br>09 December 2004 (09.12.2004),<br>paragraphs [0022] to [0025]; fig. 11 to 14<br>(Family: none) | 1-2,8,10-11<br>3-7 |
| Y<br>A | JP 2005-059161 A  (Waseda University,<br>Matsushita Electric Industrial Co., Ltd.),<br>10 March 2005 (10.03.2005),<br>paragraphs [0018] to [0031]; fig. 1 to 5<br>(Family: none) | 1-2,8-11<br>3-7 |
| Y<br>A | JP 2003-089091 A  (National Institute of<br>Advanced Industrial Science and Technology),<br>25 March 2003 (25.03.2003),<br>paragraphs [0009] to [0017]; fig. 1 to 2<br>(Family: none) | 1-2,8-11<br>3-7 |

| ☒   Further documents are listed in the continuation of Box C. | ☐   See patent family annex. |
| --- | --- |

| * | Special categories of cited documents: | | "T" | later document published after the international filing date or priority date and not in conflict with the application but cited to understand the principle or theory underlying the invention |
| --- | --- | --- | --- | --- |
| "A" | document defining the general state of the art which is not considered to be of particular relevance | | | |
| "E" | earlier application or patent but published on or after the international filing date | | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search<br>21 October, 2011 (21.10.11) | Date of mailing of the international search report<br>01 November, 2011 (01.11.11) |
| --- | --- |
| Name and mailing address of the ISA/<br>Japanese Patent Office | Authorized officer |
| Facsimile No. | Telephone No. |

Form PCT/ISA/210 (second sheet) (July 2009)

## INTERNATIONAL SEARCH REPORT

International application No.

PCT/JP2011/068794

C (Continuation).    DOCUMENTS CONSIDERED TO BE RELEVANT

| Category* | Citation of document, with indication, where appropriate, of the relevant passages | Relevant to claim No. |
|---|---|---|
| Y<br>A | JP 2001-038664 A  (Yaskawa Electric Corp.),<br>13 February 2001 (13.02.2001),<br>paragraphs [0005] to [0008]; fig. 1 to 3<br>(Family: none) | 1-2,8-11<br>3-7 |
| Y<br>A | JP 2001-038673 A  (Yaskawa Electric Corp.),<br>13 February 2001 (13.02.2001),<br>paragraphs [0005] to [0009]; fig. 1 to 3<br>(Family: none) | 1-2,8-11<br>3-7 |
| Y<br>A | JP 06-278081 A  (NEC Corp.),<br>04 October 1994 (04.10.1994),<br>paragraphs [0013] to [0018]; fig. 1<br>(Family: none) | 1-2,8,10-11<br>3-7 |
| Y<br>A | JP 2005-100143 A  (Kobe Steel, Ltd.),<br>14 April 2005 (14.04.2005),<br>paragraphs [0031] to [0044]; fig. 1 to 5<br>(Family: none) | 8,11<br>3-7 |
| Y<br>A | Microfilm of the specification and drawings<br>annexed to the request of Japanese Utility<br>Model Application No. 122620/1983(Laid-open<br>No. 029496/1985)<br>(Kobe Steel, Ltd.),<br>27 February 1985 (27.02.1985),<br>fig. 5 to 6; page 8, lines 2 to 12<br>(Family: none) | 9<br>3-7 |
| Y<br>A | Microfilm of the specification and drawings<br>annexed to the request of Japanese Utility<br>Model Application No. 122618/1983(Laid-open<br>No. 029494/1985)<br>(Kobe Steel, Ltd.),<br>27 February 1985 (27.02.1985),<br>fig. 5 to 6; page 7, line 12 to page 8, line 2<br>(Family: none) | 9<br>3-7 |
| A | JP 10-329071 A  (Yaskawa Electric Corp.),<br>15 December 1998 (15.12.1998),<br>entire text; all drawings<br>(Family: none) | 1-11 |

Form PCT/ISA/210 (continuation of second sheet) (July 2009)

**INTERNATIONAL SEARCH REPORT**

International application No.

PCT/JP2011/068794

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
    Any special technical feature common to the inventions in claims 1-8, 10-11 and the invention in claim 9 cannot be found.
    Therefore, it should be considered that the inventions in claims 1-8, 10-11 and the invention in claim 9 are set forth in claims of the present application.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**EP 2 746 000 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3300625 B